# EUROPÄISCHE PATENTANMELDUNG

(11) **EP 1 615 175 A2**
(43) Veröffentlichungstag der Anmeldung: **11.01.2006**
(21) Anmeldenummer: 05090185.9
(22) Anmeldetag: 22.06.2005
(51) Int. Cl.: G07B 17/00

(54) **Steckbare Waagebaugruppe für ein Postverarbeitungsgerät**

(30) Priorität: 06.07.2004 DE 202004010859 U
(71) Anmelder: Francotyp-Postalia GmbH, 16547 Birkenwerder (DE)
(72) Erfinder: Jauert, Joachim, 13187 Berlin (DE); Schilling, Tilmann, 10249 Berlin (DE); Ortmann, Axel, 13088 Berlin (DE)

(57) **Zusammenfassung**

Eine Anordnung für eine steckbare Waagebaugruppe (2) eines Postverarbeitungsgeräts hat einen Gehäuseteil, der eine Einbuchtung zum Einsetzen der Waagebaugruppe (2) und erste Befestigungsmittel zum Befestigen einer die Einbuchtung verschließenden Kappe oder der Waagebaugruppe aufweist. In die Einbuchtung ragt mindestens ein Teil eines Metallteils (9) hinein, welches mit einem Metallchassis des Postverarbeitungsgeräts elektrisch leitend und mechanisch verbunden ist und über ein Mittel (33) zur Erdung der Grundplatte (20) in Kontakt tritt, sobald die Waagebaugruppe (2) gesteckt wird.

## Beschreibung

Die Erfindung betrifft eine steckbare Waagebaugruppe für ein Postverarbeitungsgerät gemäß des Oberbegriffs des Anspruchs 1. Die Erfindung ermöglicht eine Erdung der Waagebaugruppe, eine Verringerung der StörAbstrahlung und Erhöhung der Störfestigkeit der Waagebaugruppe sowie deren Zerstörungsschutz durch Ableitung einer elektrostatischen Ladung während des Steckvorganges und auch danach während des ständigen Betriebes. Die Erfindung kommt neben Frankiermaschinen auch in ähnlichen Buchungs- oder Postverarbeitungsgeräten zum Einsatz.

Eine bekannte Frankiermaschine Jetmail ® der Herstellerin Francotyp-Postalia Beteiligungs AG ist für Büros mit mittleren bis hohen Postaufkommen vorgesehen und hat eine fest eingebaute statische Waage. Dabei stellt ein Blechteil eine Masse-Verbindung mit dem Chassis der Frankiermaschine her, die die Wiegemesswerte auswertet und einen Portorechner realisiert, um letztlich einen Frankierwert auf ein Poststück auszudrucken.

Eine Frankiermaschine für geringe Postaufkommen ist auch bekannt, an welche über ein Kabel eine externe Portowaage anschließbar ist. Die Frankiermaschine T1000 der Anmelderin hat im Inneren eines Sicherheitsgehäuses einen fest angeordneten Thermotransferdruckkopf zum Drucken eines Frankierabdruckes und eine Standard-Schnittstelle zum Anschluß der Portowaage. Wenn die Waage aufgrund einer elektrostatischen Entladung ausfällt, kann die Frankiermaschine dennoch weiterbetrieben werden, indem der Frankierwert manuell eingegeben wird. Die Frankiermaschine ist zur Ableitung elektrostatischer Ladungen, zur Verringerung der Störabstrahlung sowie zur Erhöhung der Störfestigkeit durch ein metallisches Chassis und mit einer auf das Sicherheitsgehäuse innen aufgebrachten elektrisch leitfähigen Schutzschicht versehen. Ein Schutz beider, sowohl der Waage als auch der Frankiermaschine würde jedoch einen relativ hohen Aufwand erfordern. Die RS232-Schnittstelle zwischen Frankiermaschine und externer Portowaage weist Treiber und Pegelwandler zur Entkopplung der beiden Geräte auf. Außerdem ist ein Anschlußkabel zum Verbinden der Waage mit der Frankiermaschine erforderlich.

Es ist auch schon eine Wiegeplattform Model No. WP02/WP5 für die Gewichtmessung einer maximalen Masse von 2 Kg bekannt, welche wahlweise neben oder auf dem Gehäuse einer Ink-jet-Frankiermaschine vom Typ Neopost IJ45 anordenbar und über ein Kabel anschließbar ist (FACTS, das Testmagazin fürs moderne Büro, Heft 5, Mai 2003, 10.Jahrgang). Die Wiegeplattform hat weder Display noch Tastatur und ist schon dadurch relativ preiswert. Die vorgenannten Nachteile bleiben jedoch bestehen, außerdem ist die nur lose auf das Gehäuse gestellte Wiegeplattform unbefestigt.

Die bekannte Frankiermaschine mymail® der Herstellerin hat im Inneren eines Sicherheitsgehäuses einen beweglich angeordneten Tintenstrahldruckkopf zum Drucken eines Frankierabdruckes. Das Gehäuse besteht aus einem oberen und unteren Gehäuseteil, wobei ersterer zum Anbringen einer nachrüstbaren Wiegeeinheit ausgebildet ist. Laut der deutschen Patentanmeldung DE 101 14 52 9 A1 hat der erste Gehäuseteil eine Einbuchtung, die zum Einsetzen der Wiegeeinheit ausgebildet ist. Im Bereich der Einbuchtung sind erste Befestigungsmittel vorgesehen, die zum Befestigen einer die Einbuchtung verschließenden Kappe ausgebildet sind. Die Kappe wird vor dem Anbringen der nachrüstbaren Wiegeeinheit entfernt, für deren Befestigung dieselben Befestigungsmittel weiter verwendet werden. Die Befestigungsmittel sind stiftartig ausgebildet und die nachrüstbare Wiegeeinheit hat Gummifüße mit entsprechenden Öffnungen zum Aufstecken der Gummifüße auf die stiftartigen Befestigungsmittel. Eine Erdung der Wiegeeinheit über Befestigungsmittel erfolgt somit nicht.

Eine elektrische Verbindung der Wiegeeinheit mit der Frankiermaschine mymail® erfolgt ausschließlich über ein Waage-Anschlußkabel im Gehäuseinnern. Die Abfrage des digitalisierten Wiegewertes durch den Mikroprozessor auf dem Mainboard erfolgt über einen I²C-Bus. Die Montierbarkeit der Wiegeeinheit ist durch die Notwendigkeit der Kontaktierung mittels Stecken eines Kabels erschwert. In nachteiliger Weise weist die Waagebaugruppe sowohl eine verhältismäßig hohe Abstrahlung, als auch eine verhältismäßig geringe Störfestigkeit auf.

Eine Waagebaugruppe sollte einen ausreichenden Schutz vor Zerstörung durch Electro Static Discharge (ESD) und betreff der elektromagnetischen Verträglichkeit (EMV) besitzen.

Aus dem Stand der Technik ist zwar allgemein bekannt, zur Erdung dicke geflochtene Massekabel zu verwenden, jedoch wird dafür auch mehr Platz im Gehäuse benötigt, der oft nicht zur Verfügung steht. Zudem weisen Kabel generell eine höhere Induktivität als z.B. flächige Masseverbindungen auf, was das EMV-Verhalten nachteilig beeinflusst.

Weiterhin ist zur Erdung eine Verwendung von CuBe-Federn bekannt (siehe www. infratron.de; www.zillkon.de).

Der Erfindung liegt die Aufgabe zugrunde, eine steckbare Waagebaugruppe für ein Postverarbeitungsgerät zu schaffen, welche die oben genannten Nachteile nicht aufweist. Neben einer Erhöhung der Störfestigkeit und Verringerung der Abstrahlung soll eine einfache Kontaktierung und zuverlässige Erdung für die Waagebaugruppe zum Beispiel einer Frankiermaschine realisiert werden. Die Erdung der Waagebaugruppe soll deshalb trotz der Forderung nach einfacher Bauweise und leichter Montierbarkeit möglichst niederimpedant und niederinduktiv sein. Ein ESD-Schutz soll beim Einbau und Ausbau der Waagebaugruppe sowie während ihres Betriebes gewärleistet werden. Eine Subaufgabe besteht darin, das die Waagebaugruppe einschließende System kostengünstig, abstrahlungsarm und störfest gemäß den Zulassungsbedingungen der Postbehörde zu gestalten.

Die Aufgabe wird mit den Merkmalen der Anordnung nach dem Anspruch 1 gelöst.

Die Erfindung basiert auf dem Gedanken, einer kabellosen Erdung, bei welcher die Masseverbindung von der Waagebaugruppe zur Hauptsteuerungsplatine (Mainboard) der Frankiermaschine in Form eines festen Metallteils realisiert wird, das eine sehr niedrige Impedanz und sehr niedrige Induktivität aufweist, was sowohl eine verhältismäßig geringe Abstrahlung, als auch eine verhältismäßig hohe Störfestigkeit der Waagebaugruppe bewirkt.

Es ist vorgesehen, dass ein erstes Steck- und Kontaktiermittel gegenüber einer ersten Öffnung in einer metallischen Grundplatte der Waagebaugruppe angeordnet ist, wenn letztere auf einer planen Bodenfläche einer Einbuchtung des Gerätegehäuses aufliegt und dass die Leiterplatte für die Wiegeelektronik über mindestens ein Befestigungs- und Verbindungselement mit der metallischen Grundplatte verbunden ist und ein zum ersten Steck- und Kontaktiermittel in Steckrichtung zusammenpassendes zweites Steck- und Kontaktiermittel aufweist, wobei die Erdung der Wiegeelektronik von den Steck- und Kontaktiermitteln getrennt über ein Mittel zur Erdung der metallischen Grundplatte erfolgt.

Es ist weiter vorgesehen, dass das feste Metallteil ein Chassisteil der Frankiermaschine ist und dass die Waagebaugruppe eine an der metallischen Grundplatte befestigten Erdungsfeder als Mittel zur kabellosen Erdung verwendet, wobei durch Direktsteckung der Waagebaugruppe deren Erdungsfeder auf das Chassisteil der Frankiermaschine drückt und den elektrischen Kontakt über eine "flächige" Verbindung zwecks Erdung herstellt.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1,: perspektivische Ansicht einer Frankiermaschine mit steckbarer Waagebaugruppe,
- Fig. 2,: Draufsicht auf die Grundplatte der steckbaren Waagebaugruppe an einer Frankiermaschine ohne überdeckende Gehäuseteile,
- Fig. 3,: perspektivische Ansicht einer steckbaren Waagebaugruppe ohne Gehäuse, ohne Elektronik-Leiterplatte und ohne EMV-Schirmung,
- Fig. 4a,: Schnitt-Darstellung der Waagebaugruppe durch eine Schnitt-Linie AA',
- Fig. 4b,: Schnitt-Darstellung der Waagebaugruppe durch eine Schnitt-Linie BB',
- Fig. 5,: perspektivische Ansicht einer Erdungsfeder,
- Fig. 6,: perspektivische Ansicht einer auf ein Chassisteil gesteckten Waagebaugruppe.

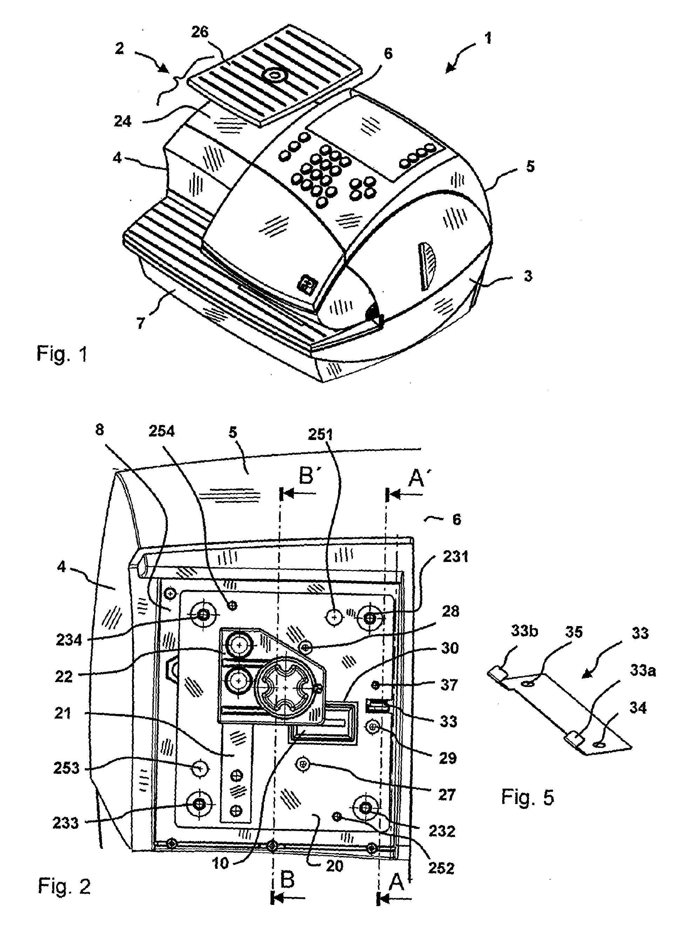

Die Fig. 1 zeigt eine perspektivische Ansicht einer Frankiermaschine 1 mit steckbarer Waagebaugruppe 2 auf der Oberseite 6 an der Ecke zwischen der linken Seite 4 und der verdeckten Rückseite 5. Die Waagebaugruppe 2 hat eine Abdeckung 24 mit einer Öffnung, die durch einen aufgesteckten Wiegeteller 26 verdeckt wird. Alle Gehäuseteile, die Abdeckung 24 und der Wiegeteller 26 sind zum Beispiel aus farbigen Kunststoff hergestellt. Wenn die Frankiermaschine ohne die steckbare Waagebaugruppe betrieben werden soll, wird anstelle der Abdeckung 24 eine Kappe aufgesteckt, welche eine der Abdeckung 24 ähnliche Form aufweist. Die Poststückzu- und -abführung erfolgt auf der Vorderseite 7 von der linken Seite 4 und zur rechten Seite 3 der Frankiermaschine 1.

Die Fig. 2 zeigt eine Draufsicht auf eine Grundplatte der steckbaren Waagebaugruppe an einer Frankiermaschine bei abgenommener Abdeckung 24 auf der Oberseite 6 an der Ecke zwischen der linken Seite 4 und der verdeckten Rückseite 5 der Frankiermaschine 1. Bei einem abgenommenen Deckel (nicht dargestellt) zeigt ein oberer (erster) Gehäuseteil eine Einbuchtung mit einer planen Bodenfläche 8, welche zum Einsetzen der Waagebaugruppe ausgebildet ist. Von der Waagebaugruppe ist der besseren Übersichtlichkeit halber nur eine metallische Grundplatte 20 mit auf deren Oberseite montierten Wiegebalken 21, einem auf dem Wiegebalken 21 montierten Wiegetellerhalter 22 und mit auf deren Unterseite montierten Gummifüßen 231, 232, 233, 234 dargestellt worden. Die metallische Grundplatte 20 weist eine erste Öffnung 30 auf, um im gesteckten Zustand der Waagebaugruppe ein gegenüberliegendes erstes Steck- und Kontaktiermittel 10 kontaktieren zu können. Das erste Steck- und Kontaktiermittel 10 kann beispielsweise als Steckkontaktleiste (card edge) einer Hauptsteuerungsplatine der Frankiermaschine ausgeführt sein. Die metallische Grundplatte 20 weist Befestigungs- und Verbindungselemente 27, 28 sowie 29 auf, für die Befestigung einer montierbaren Leiterplatte (nicht dargestellt) und die elektrischen Verbindung mit der Wiegeelektronik auf der Leiterplatte zu deren Erdung sowie für die Befestigung und Erdung einer montierbaren EMV-Schirmung der Leiterplatte. Vorzugsweise werden Metall-Bolzen als Befestigungs- und Verbindungselemente eingesetzt. Die Leiterplatte weist ein zum ersten Steck- und Kontaktiermittel 10 (Steckerkontaktleiste) passendes zweites Steck- und Kontaktiermittel 11 (Steckbuchsenleiste) auf. Die metallische Grundplatte 20 weist mindestens eine zweite Öffnung 31 für die Mittel zu deren Erdung auf. Durch diese zweite Öffnung 31 gehend ist eine erste Schnitt-Linie AA' gezeichnet. Nahe der Öffnung 31 und nahe der ersten Schnitt-Linie AA' ist ein (Gewinde-)Loch 37 in die metallische Grundplatte 20 eingearbeitet. Eine zweite Schnitt-Linie BB' geht durch den Wiegetellerhalter 22. Auf der zweiten Schnitt-Linie BB' ist ein zweites (Gewinde-) Loch 39 in die metallische Grundplatte 20 eingearbeitet, das aber durch den Wiegetellerhalter 22 verdeckt wird. Beide Gewindelöcher 37 und 39 dienen zur Befestigung und Kontaktierung einer Erdungsfeder 33, die auf der Unterseite der metallischen Grundplatte 20 montiert ist. Die Erdungsfeder 33 kontaktiert mindestens eine Metallzunge 9a, wenn die Waagebaugruppe gesteckt ist. In die metallische Grundplatte 20 sind Öffnungen 251, 252, 253, 254 für die Befestigung und Fixierung der Abdeckung 24 eingearbeitet.

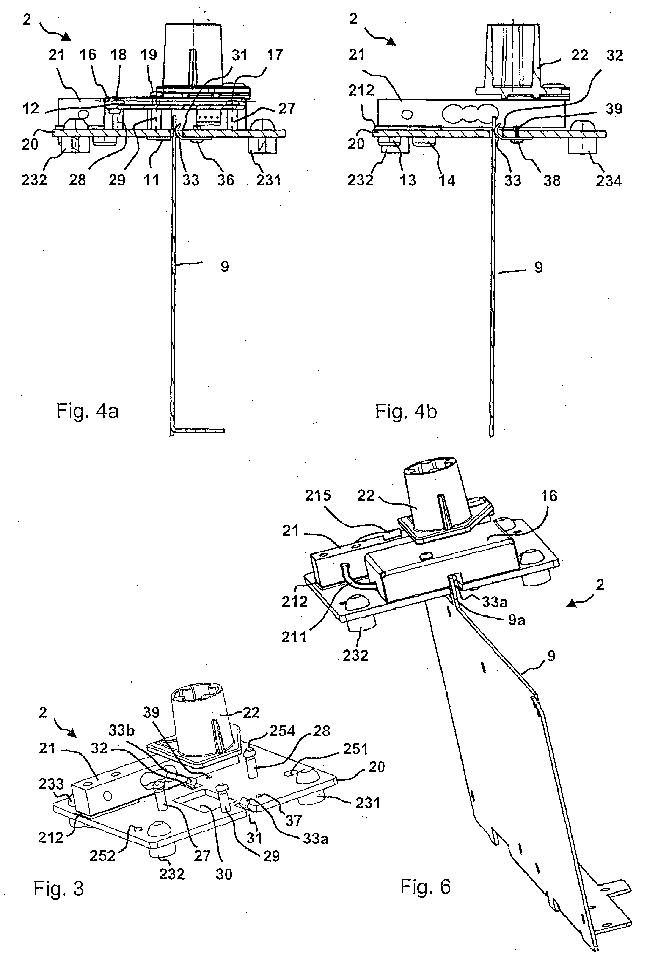

Die Fig. 3 zeigt eine perspektivische Ansicht einer steckbaren Waagebaugruppe ohne Elektronik-Leiterplatte und ohne EMV-Schirmung. Die Grundplatte 20 der Waagebaugruppe 2 weist oberhalb Metallbolzen als Befestigungs- und Verbindungselemente 27, 28, 29, unterhalb Gummifüße 231, 232, 233, 234 sowie Öffnungen 251, 252, 253, 254 zur Befestigung und Fixierung der Abdeckung (nicht gezeigt) auf. Die Grundplatte 20 weist in deren einen Hälfte mittig eine erste Öffnung 30 auf. In deren anderen Hälfte ist ein Wiegebalken 21 angeordnet, welcher an seinen einem Ende über eine Distanzplatte 212 an der Grundplatte 20 der Waagebaugruppe 2 in der Nähe des einen Gummifußes 233 befestigt ist. Am anderen Ende des Wiegebalkens 21 ist der Wiegetellerhalter 22 angebracht. Die Gewindelöcher 37,39 dienen zur Befestigung und Kontaktierung der Erdungsfeder an der metallischen Grundplatte 20, in welche beidseitig zur Öffnung 30 weitere Öffnungen 31, 32 für Metallzungen des Metallteils und für die Arme 33a, 33b der Erdungsfeder eingearbeitet sind.

Die Figuren 4a bzw. 4b zeigen Schnitt-Darstellungen der Waagebaugruppe 2. Ein Chassisteil der Frankiermaschine bildet ein festes Metallteil 9, welches in Kontakt mit einer Erdungsfeder 33 gebracht dargestellt worden ist. Die Erdungsfeder 33 ist an der metallischen Grundplatte 20 mittels mindestens einem Kontaktier- und Befestigungselement 36 bzw. 38 befestigt.
Bei der Schnitt-Darstellung nach Figur 4a wird die Waagebaugruppe durch eine Schnitt-Linie AA' geschnitten gezeigt. Der Schnitt geht durch die mindestens eine zweite Öffnung 31 der metallischen Grundplatte 20 aber am (Gewinde-)Loch für ein Kontaktier- und Befestigungselement 36 vorbei und durch das feste Metallteil 9. Das Kontaktier- und Befestigungselement 36 ist beispielsweise eine Gewinde- oder Metallschneidschraube, für welche das (Gewinde-)Loch 37 in der metallischen Grundplatte 20 vorgesehen ist. Die Befestigungs- und Verbindungselemente sind hier mindestens ein Metallbolzen 27, 28 mit Innengewinde und Schrauben 17, 18 zur Befestigung der montierbaren Leiterplatte 12 mit der Wiegeelektronik, wobei je Metallbolzen ein Bohrloch in der Leiterplatte 12 vorgesehen ist. Als Befestigungs- und Verbindungselemente zur Befestigung einer montierbaren EMV-Abdeckung 16 kommen hier ebenfalls ein Metallbolzen 29 mit Innengewinde und eine Schraube 19 zum Einsatz.

Bei der Schnitt-Darstellung nach Figur 4b wird die Waagebaugruppe durch eine Schnitt-Linie BB' geschnitten gezeigt. Die metallische Grundplatte 20 weist eine weitere Öffnung 32 für die Mittel zu deren Erdung auf. Die zweite Schnitt-Linie BB' geht durch diese weitere Öffnung 32, das (Gewinde-)Loch 39 in der metallischen Grundplatte 20, durch den Wiegetellerhalter 22 und durch das feste Metallteil 9. Der Wiegebalken 21 ist an seinen einem Ende über eine Distanzplatte 212 an der Grundplatte 20 mittels Wiegebalken-Schrauben, Nieten oder vergleichbare Befestigungselemente 13, 14 befestigt. Durch Direktsteckung der Waagebaugruppe drückt deren Erdungsfeder auf das feste Metallteil 9 bzw. ein Chassisteil der Frankiermaschine und stellt den elektrischen Kontakt über eine "flächige" Verbindung zwecks Erdung her.

Die Erdung erfolgt über die an der Waagebaugruppe angeschraubte, angeordnete Erdungsfeder 33, welche während des Steckvorganges dem Kontaktiervorgang des Steck- und Kontaktiermittels 10 vorauseilend sowie im gesteckten Zustand die Metallzungen des Metallteil 9 kontaktiert. Das Metallteil 9 gehört zum Blechchassis des Gerätes und bildet die Haupterde einer Frankiermaschine. Die Erdung erfolgt derart, dass bei Steckung der Waagebaugruppe zuerst die Erdungsfeder kontaktiert und danach die Signalleitungen des Steck- und Kontaktiermittels 10, beim Abziehen entsprechend umgekehrt, um Beschädigungen der Waagebaugruppe bzw. Frankiermaschine durch ESD zu vermeiden. Es ist vorgesehen, dass die Erdungsfeder eine CuBe-Feder mit spezieller an den Steckvorgang angepassten Bauform ist. Es ist ein mechanischer Aufbau und Anordnung der Erdungsfeder derart vorgesehen, dass zwei Arme der Erdungsfeder den elektrischen Kontakt flankieren, um eine "flächige" Anbindung zu erzeugen.

Die Fig. 5 zeigt eine perspektivische Ansicht einer Erdungsfeder, die als zweiarmige Blattfeder 33 ausgebildet ist, deren beide Arme 33a, 33b eine gleichartige Krümmung aufweisen. Die Krümmung erfolgt mindestens in Steckrichtung der Waagebaugruppe oder entgegengesetzt dazu. Die Krümmung kann zum Beispiel soweit geführt werden, dass an der Basis beide Arme in dieselbe Richtung zeigen aber dass die Enden der Arme in die dazu entgegengesetzte Richtung zeigen. Die Enden der Arme können auch aufgerollt sein. Die zweiarmige Blattfeder 33 weist in der Nähe zu deren beiden Armen 33a, 33b jeweils eine Befestigungsöffnung 32, 34 auf, beispielsweise Löcher für die Schrauben 36 und 38 oder vergleichbare Kontaktier- und Befestigungselemente.

Die Figur 6 zeigt eine perspektivische Ansicht einer auf ein Metallteil 9 gesteckten Waagebaugruppe 2 ohne Gehäuse. Ein Arm 33a der CuBe-Feder ist in der einen sichtbaren zweiten Öffnung 31 der metallischen Grundplatte 20 in Eingriff mit einer Metallzunge 9a gebracht dargestellt.

Sowohl die weitere Öffnung 32 als auch die andere der beiden Metallzungen, d.h. die Metallzunge 9b, sind durch den Steckvorgang ebenfalls in Eingriff miteinander gebracht worden, was aber in der Figur 6 verdeckt und somit nicht dargestellt ist.

Die steckbare Waagebaugruppe ist zum Wiegen der einzelnen Poststücke vorgesehen und vom Kunden jederzeit nachrüstbar. Sie besteht u.a. aus einem Wiegebalken (Wägezelle) und einer Leiterplatte mit Elektronik, wobei die Wägezelle 21 über ein geschirmtes Rundkabel 211 mit der Elektronik auf der Leiterplatte verbunden ist. Die Leiterplatte ist auf der metallischen Grundplatte 20 montiert und trägt eine EMV-Abdeckung 16 aus Metallblech, das eine Öffnung für das Rundkabel 211 hat (Fig. 6).

Ein derartiges Wiegemodul K-DF2SR-3/10-FPMK der Firma Hottinger Baldwin Messtechnik GmbH (HBM) wird auch bei einer nachträglichen Bestellung komplett kalibriert einem Kunden geliefert. Der Wiegebereich beträgt 5000 Gramm mit einer Genauigkeit im Messbereich bei Referenztemperatur von 0...2kg +/- 1g und 2...5kg +/- 5g. Im nominalen Temperaturbereich +10...+50°C wird die Genauigkeit garantiert. Die Wägezelle besitzt einen Dehnungs-Mess-Streifen (DMS) 15 dessen Widerstandsänderung mit einem 16 Bit AD-Wandler konvertiert und über einen I²C-Bus Interface an das Mainboard der Frankiermaschine übertragen wird. Für die Wägezelle vom Typ DF2SR-3/10kg wird eine Vorlast von ca. 150 g angegeben. Die Elektronik besteht aus Differenz-Eingangsverstärker, 16 bit AD-Wandler ADS1100 mit I²C-Interface und EEPROM für waagespezifische Daten, EMV-Schutzbeschaltung sowie dem Direktsteckverbinder Fischer DF OB 06 als zweites Steck- und Kontaktiermittel 11. Via einer - nicht gezeigten - zungenförmigen Ausformung des Mainbords mit beiderseitig angeordneten Kontaktflächen als erstes Steck- und Kontaktiermittel 10 kommt es zur Verbindung mit dem zweiten Steck- und Kontaktiermittel 11. Die Elektronik benötigt eine Spannungsversorgung von 5 V (+5%, - 7%). Der Wiegebalken 21 ist auf der einen Seite über eine Distanzplatte 222 mit einer Dicke von 0,5 mm auf der metallischen Grundplatte 20 befestigt. Ein mechanischer Überlastschutz in Richtung Schwerkraft wird durch die metallische Grundplatte 20 realisiert, welche ein Durchbiegen des Wiegebalkens auf seiner anderen Seite nach unten begrenzt.

Es ist eine Vielzahl alternativer Anordnungen im Rahmen der Ansprüche denkbar, die unterschiedlich ausgeführt sind. Beispielsweise können mehrere Metallzungen am Metallteil und entsprechend viele zweite Öffnungen in der metallischen Grundplatte sowie entsprechend viele bzw. mehrere Arme der Erdungsfeder vorgesehen sein. Alternativ zu einer metallischen Grundplatte 20 kann letztere auch aus einem elektrisch leitfähigen Kunststoff hergestellt sein, der ggf. metallische und/oder metallisierte Kontaktflächen aufweist. Als Erdungsfeder können ebenso spezielle Federkontakte eingesetzt werden. Alternativ sind Steckerleiste /Steckbuchsenleiste oder ein anderer vergleichbarer Steckverbinder als Steck- und Kontaktiermittel 10, 11 einsetzbar. Weiter können Stecker und Steckbuchse zueinander vertauscht eingesetzt werden. Somit können offensichtlich weitere andere Ausführungen der Erfindung entwickelt bzw. eingesetzt werden, die vom gleichen Grundgedanken der Erfindung ausgehen und von den anliegenden Ansprüchen umfaßt werden.

### Liste der verwendeten Bezugszeichen:

1 = Frankiermaschine
2 = Waagebaugruppe
3, 4 = rechte bzw. linke Seite der Frankiermaschine
5 = Rückseite der Frankiermaschine
6 = Oberseite der Frankiermaschine
7 = Vorderseite der Frankiermaschine
8 = plane Bodenfläche der Einbuchtung
9 = Metallteil
9a, 9b = Metallzungen des Metallteils
10 = 1. Steck- und Kontaktiermittel (Steckerleiste)
11 = 2. Steck- und Kontaktiermittel (Steckbuchsenleiste)
12 = Leiterplatte für Wiegeelektronik
13, 14 = Schrauben (Kontaktier- und Befestigungselemente)
16 = EMV-Schirmung
17, 18, 19 Schrauben (Kontaktier- und Befestigungselemente)
20 = metallische Grundplatte
21 = Wiegebalken (Wägezelle)
211 = geschirmtes Rundkabel
212 = Distanzplatte
215 = Dehnungs-Mess-Streifen
22 = Wiegetellerhalter
231, 232, 233, 234 = Gummifüße
24 = Abdeckung der Waagebaugruppe
251, 252, 253, 254 = Öffnungen zur Befestigung/Fixierung d. Abdeckung
26 = Wiegeteller
27, 28, 29 = Befestigungs- und Verbindungselemente (Metallbolzen)
30 = erste Öffnung für einen Steckverbinder 10
31, 32 = Öffnungen für Metallzungen des Metallteils
33 = zweiarmige Blattfeder, Erdungsfeder
33a, 33b = Arme der Blattfeder / Erdungsfeder
34, 35 = Befestigungsöffnung in der Blattfeder / Erdungsfeder
36, 38 = Schrauben (Kontaktier-/Befestigungselemente für Erdungsfeder)
37,39 = Gewindelöcher zur Befestigung und Kontaktierung der Erdungsfeder an der metallischen Grundplatte.

## Patentansprüche

1. Anordnung für eine steckbare Waagebaugruppe eines Postverarbeitungsgeräts, mit einem Gehäuseteil des Postverarbeitungsgeräts, der eine Einbuchtung zum Einsetzen der Waagebaugruppe und erste Befestigungsmittel zum Befestigen einer die Einbuchtung verschließenden Kappe oder der Waagebaugruppe aufweist, wobei die steckbare Waagebaugruppe eine Grundplatte (20) mit einem auf deren Oberseite montierten Wiegebalken (21), Wiegetellerhalter (22) und Leiterplatte (12) für die Wiegeelektronik und mit auf deren Unterseite montierten Gummifüßen und wobei die Wiegeelektronik mindestens ein zweites Steck- und Kontaktiermittel zur Kontaktierung der Wiegeelektronik mit der Hauptsteuerungsplatine des Postverarbeitungsgeräts (1) aufweist, **gekennzeichnet dadurch, dass** ein zum zweiten Steck- und Kontaktiermittel (11) passendes erstes Steck- und Kontaktiermittel (10) mit der Hauptsteuerungsplatine elektrisch leitend und mechanisch verbunden ist und dass mindestens ein Teil eines Metallteils (9) in die Einbuchtung hineinragt, welches mit einem Metallchassis des Postverarbeitungsgeräts (1) elektrisch leitend und mechanisch verbunden ist, wobei das mindestens eine Teil mit einem Mittel zur Erdung der Grundplatte (20) in Kontakt tritt, sobald die Waagebaugruppe gesteckt wird und wobei das Mittel zur Erdung den elektrischen Kontakt über eine flächige Verbindung zum Metallteil (9) zwecks Erdung herstellt.

2. Anordnung, nach Anspruch 1, **gekennzeichnet dadurch, dass** das erste Steck- und Kontaktiermittel (10) gegenüber einer ersten Öffnung (30) der metallischen Grundplatte (20) angeordnet ist, wenn letztere auf einer planen Bodenfläche (8) der Einbuchtung aufliegt und dass die Leiterplatte (12) für die Wiegeelektronik über mindestens ein Befestigungs- und Verbindungselement (27, 28) mit der metallischen Grundplatte (20) verbunden ist und ein zum ersten Steck- und Kontaktiermittel (10) in Steckrichtung zusammenpassendes zweites Steck- und Kontaktiermittel (11) aufweist, wobei die Erdung der Wiegeelektronik von den Steck- und Kontaktiermitteln (10, 11) getrennt über das Mittel zur Erdung der metallischen Grundplatte (20) erfolgt.

3. Anordnung, nach Anspruch 1, **gekennzeichnet dadurch, dass** die metallische Grundplatte (20) mindestens eine zweite Öffnung (31, 32) für das Mittel zu deren Erdung aufweist.

4. Anordnung, nach Anspruch 3, **gekennzeichnet dadurch, dass** das Mittel zur Erdung der metallischen Grundplatte (20) eine Erdungsfeder (33) ist, dass die Erdungsfeder (33) an der metallischen Grundplatte (20) elektrisch leitend befestigt ist und mit mindestens einer Metallzunge (9a, 9b) des Metallteils (9) in Kontakt gebracht wird, sobald die mindestens eine Metallzunge (9a, 9b) in die mindestens eine zweite Öffnung (31, 32) hineinragt.

5. Anordnung, nach Anspruch 4, **gekennzeichnet dadurch, dass** die Erdungsfeder (33) eine CuBe-Blattfeder ist.

6. Anordnung, nach Anspruch 5, **gekennzeichnet dadurch, dass** die Erdungsfeder (33) eine zwei- oder mehrarmige Blattfeder ist, deren beide Arme (33a, 33b) eine gleichartige Krümmung aufweisen.

7. Anordnung, nach Anspruch 6, **gekennzeichnet dadurch, dass** die Krümmung mindestens in Steckrichtung der Waagebaugruppe oder entgegengesetzt dazu verläuft.

8. Anordnung, nach Anspruch 7, **gekennzeichnet dadurch, dass** die Enden der Arme aufgerollt sind.

9. Anordnung, nach Anspruch 7, **gekennzeichnet dadurch, dass** die Krümmung soweit geführt ist, dass an der Basis beide Arme in dieselbe Richtung zeigen aber dass die Enden der Arme in die dazu entgegengesetzte Richtung zeigen.

10. Anordnung, nach Anspruch 6, **gekennzeichnet dadurch, dass** die zweiarmige Blattfeder (33) in der Nähe zu deren beiden Armen (33a, 33b) jeweils eine Befestigungsöffnung (32, 34) aufweist.

11. Anordnung, nach Anspruch 10, **gekennzeichnet dadurch, dass** die Befestigungsöffnungen (32, 34) Löcher für die Schrauben (36 und 38) oder vergleichbare Kontaktier- und Befestigungselemente umfasst.

12. Anordnung, nach Anspruch 1, **gekennzeichnet dadurch, dass** die Kappe oder Abdeckung (24) der steckbaren Waagebaugruppe (2) äußerlich eine ähnliche Form aufweisen, wobei die Abdeckung (24) der steckbaren Waagebaugruppe, die Kappe und die Gehäuseschale, in welche die Einbuchtung eingeformt ist, aus Kunststoff hergestellt sind und wobei über die Grundplatte (20) und deren Mittel zur Erdung über eine flächige Verbindung zum Metallteil (9) der elektrischen Kontakt zum Metallchassis des Postverarbeitungsgeräts hergestellt wird.

13. Anordnung, nach Anspruch 2, **gekennzeichnet dadurch, dass** mindestens ein Bohrloch der Leiterplatte (12) vorgesehen ist, um die Erdung der Wiegeelektronik via mindestens einer Schraube und einem Metall-Bolzen als Befestigungs- und Verbindungselement (27, 28) zu ermöglichen, wobei der Bolzen ein Innen-Gewinde aufweist.

14. Anordnung, nach Anspruch 2, **gekennzeichnet dadurch, dass** mindestens ein Bohrloch der Leiterplatte (12) vorgesehen ist, um die Erdung der Wiegeelektronik via mindestens einer Mutter und einem Metall-Bolzen als Befestigungs- und Verbindungselement (27, 28) zu ermöglichen, wobei der Bolzen ein Aussen-Gewinde aufweist.

15. Anordnung, nach Anspruch 1, **gekennzeichnet dadurch, dass** die Einbuchtung in einer oberen Gehäuseschale eines Sicherheitsgehäuses einer Frankiermaschine angeordnet ist.

16. Anordnung, nach Anspruch 1, **gekennzeichnet dadurch, dass** die Waagebaugruppe eine innen angeordnete EMV-Schirmung (16) besitzt, die über die Grundplatte (20) und deren Mittel zur Erdung über eine flächige Verbindung zum Metallteil (9) den elektrischen Kontakt zum Metallchassis des Postverarbeitungsgeräts besitzt, wobei die metallische Grundplatte (20) ein Befestigungs- und Verbindungselement (29) aufweist, für die Befestigung und Erdung der über der Leiterplatte mit der Wiegeelektronik montierten EMV-Schirmung.

17. Anordnung, nach Anspruch 1, **gekennzeichnet dadurch, dass** die Steck- und Kontaktiermittel (10, 11) Stecker und Buchsen oder Steckerleisten und Steckbuchsenleisten sind.

18. Anordnung, nach Anspruch 1, **gekennzeichnet dadurch, dass** die Steck- und Kontaktiermittel (10, 11) eine zungenförmigen Ausformung des Mainbords mit beiderseitig angeordneten Kontaktflächen und ein Direktsteckverbinder sind.
